(19) Europäisches Patentamt / European Patent Office / Office européen des brevets

(11) **EP 1 488 377 B1**

(12) **EUROPÄISCHE PATENTSCHRIFT**

(45) Veröffentlichungstag und Bekanntmachung des Hinweises auf die Patenterteilung:
**02.05.2007  Patentblatt 2007/18**

(51) Int Cl.:
*G06T 5/00* $^{(2006.01)}$    *G02B 21/00* $^{(2006.01)}$

(21) Anmeldenummer: **02795124.3**

(22) Anmeldetag: **09.12.2002**

(86) Internationale Anmeldenummer:
**PCT/EP2002/013914**

(87) Internationale Veröffentlichungsnummer:
**WO 2003/052694 (26.06.2003 Gazette 2003/26)**

(54) **VERFAHREN ZUR SELBSTÜBERWACHUNG EINES MIKROSKOPSYSTEMS, MIKROSKOPSYSTEM UND SOFTWARE ZUR SELBSTÜBERWACHUNG**

METHOD FOR SELF-MONITORING A MICROSCOPE SYSTEM, MICROSCOPE SYSTEM, AND SOFTWARE FOR SELF-MONITORING A MICROSCOPE SYSTEM

PROCEDE D'AUTOSURVEILLANCE D'UN SYSTEME MICROSCOPE, SYSTEME MICROSCOPE ET LOGICIEL D'AUTOSURVEILLANCE

(84) Benannte Vertragsstaaten:
**DE FR GB**

(30) Priorität: **15.12.2001  DE 10161613**

(43) Veröffentlichungstag der Anmeldung:
**22.12.2004  Patentblatt 2004/52**

(73) Patentinhaber: **Leica Microsystems CMS GmbH**
**35578 Wetzlar (DE)**

(72) Erfinder: **OLSCHEWSKI, Franck**
**69118 Heidelberg (DE)**

(74) Vertreter: **Stamer, Harald et al**
**Leica Microsystems GmbH**
**Corporate Patents + Trademarks Department**
**Ernst-Leitz-Strasse 17-37**
**35578 Wetzlar (DE)**

(56) Entgegenhaltungen:
**DE-A- 10 057 948        DE-A- 19 853 407**

- LI J ET AL: "MEASUREMENT AND ANALYSIS OF DEFOCUSED POINT SPREAD FUNCTIONS AND OPTICAL TRANSFER FUNCTIONS OF A MICROSCOPE" PROCEEDINGS OF THE PACIFIC RIM CONFERENCE ON COMMUNICATIONS, COMPUTERS, AND SIGNAL PROCESSING. (PAC RIM). VICTORIA, BRITISH COLUMBIA, MAY 17 - 19, 1995, NEW YORK, IEEE, US, 17. Mai 1995 (1995-05-17), Seiten 407-410, XP000559579 ISBN: 0-7803-2554-0

**Beschreibung**

Die Erfindung betrifft Verfahren zur Selbstüberwachung eines Mikroskopssystems.

Das Dokument Kundur, Hatzinakos (1996), Blind Image Deconvolution: "An Algorithmic Approach to Practical Image Restoration". IEEE Signal Processing Magazine, May 1996 beschreibt neben vielen anderen beispielhaft den zugrundeliegenden Stand der Technik zur Beurteilung und Verbesserung optisch bandlimitierender Systeme ohne Vorwissen. In Publikationen wie Bovic (2000) Handbook of Image and Video Processing, Academic Press wird der Stand der Technik zur Verbesserung der Bilddaten optisch bandlimitierter Systeme unter Nutzung von Vorwissen ausführlich beschrieben. Durch derartige - dort ausführlich beschriebenen und diskutierten - Gattungen von algorithmischen Komponenten, die vorteilhafterweise als Software realisiert werden, erschliesst sich die Möglichkeit die von einem Mikroskopsystem gelieferten Bilddaten zu verbessern, aber auch die Betriebsweise des Mikroskopsystems selber zu überwachen. Die Lehre dieser Erfindung ist die geeignete Verknüpfung technischer Mittel um aus einer derartigen Überwachung Handlungsanweisungen für Benutzer zum Zwecke der Ergonomieerhöhung zu schaffen. Insbesondere Trainingszeiten sollen minimiert werden und damit eine Wertsteigerung des Mikroskopsystems erzielt werden. Der in obigen Publikationen erwähnte Stand der Technik wird hier im wesentlichen so angesehen, als wäre er in dieser Beschreibung enthalten.

Das Dokument XP 000559579, Li et al; "Measurement and Analysis of Defocused Point Spread Functions and Optical Transfer Functions of a Microscope" veröffentlicht am 17.05.1995; offenbart, wie die Point Spread Function und die Optische-Transfer-Funktion eines Mikroskops gemessen und analysiert werden kann. Dadurch kann man die gemessenen Funktionen mit den theoretisch berechneten Werten vergleichen. Es hat sich gezeigt, dass bei den hier verwendeten numerischen Aperturen die theoretischen Funktionen den gemessenen Funktionen sehr nahe kommen. Die defokussierten Point-Spread-Functions werden zur optischen Schnittdarstellung verwendet.

Der Erfindung liegt die Aufgabe zugrunde ein Verfahren zu schaffen, mit dem schnell ein Benutzer eines Mikroskops zu einer optimalen von Fehlern bereinigten Abbildung eines Objekts gelangen kann. Diese Aufgabe wird gelöst durch ein Verfahren mit den Merkmalen des kennzeichnenden Teils des Anspruchs 1.

Eine zusätzliche Aufgabe der Erfindung ist es eine Software schaffen, mit der ein Scanmikroskop bei der Endkontrolle in der Produktion bezüglich der Qualität überprüft werden kann, oder mit der eine schnelle, optimale Bilderfassung auch durch einen weniger geübten Benutzer möglich ist. Die vorstehende Aufgabe wird gelöst durch eine Software, die durch die kennzeichnenden Merkmale des Anspruchs 11 bestimmt ist.

Es ist von Vorteil, dass eine einfache Nutzung für den Anwender (Erhöhung der Ergonomie), der Reduktion der Fehlerrate (Sicherheit) und Reduktion der Lernzeit (Kosten) erreicht wird. Hinzu kommt, dass die Erfindung ebenfalls für ist die Diagnose von Fertigungsfehlern während der Montage von Mikroskopen eingesetzt werden kann. Ist nämlich eine optische Komponente des Mikroskops nicht richtig eingebaut oder justiert, so kommt es zu Abbildungsfehlern. Die Erfindung ermöglicht dann ein schnelles Auffinden der Fehlerquellen. Die Erfindung führt zum erfolgreichen Mikroskopieren und erzielt eine bessere Akzeptanz des Systems bei den Benutzern. Den vollen Nutzen der im Stand der Technik beschriebenen losen Sammlung von Einzelfunktionen enthält der Benutzer nur, wenn alle einzelnen Komponenten

Der Erfindung liegt die Aufgabe zugrunde ein Verfahren zu schaffen, mit dem schnell ein Benutzer eines Mikroskops zu einer optimalen von Fehlern bereinigten Abbildung eines Objekts gelangen kann. Diese Aufgabe wird gelöst durch ein Verfahren mit den Merkmalen des kennzeichnenden Teils des Anspruchs 1.

Eine zusätzliche Aufgabe der Erfindung ist es eine Software schaffen, mit der ein Scanmikroskop bei der Endkontrolle in der Produktion bezüglich der Qualität überprüft werden kann, oder mit der eine schnelle, optimale Bilderfassung auch durch einen weniger geübten Benutzer möglich ist. Die vorstehende Aufgabe wird gelöst durch eine Software, die durch die kennzeichnenden Merkmale des Anspruchs 11 bestimmt ist.

Es ist von Vorteil, dass eine einfache Nutzung für den Anwender (Erhöhung der Ergonomie), der Reduktion der Fehlerrate (Sicherheit) und Reduktion der Lernzeit (Kosten) erreicht wird. Hinzu kommt, dass die Erfindung ebenfalls für ist die Diagnose von Fertigungsfehlern während der Montage von Mikroskopen eingesetzt werden kann. Ist nämlich eine optische Komponente des Mikroskops nicht richtig eingebaut oder justiert, so kommt es zu Abbildungsfehlern. Die Erfindung ermöglicht dann ein schnelles Auffinden der Fehlerquellen. Die Erfindung führt zum erfolgreichen Mikroskopieren und erzielt eine bessere Akzeptanz des Systems bei den Benutzern. Den vollen Nutzen der im Stand der Technik beschriebenen losen Sammlung von Einzelfunktionen enthält der Benutzer nur, wenn alle einzelnen Komponenten in ein Gesamtsystem eingebunden sind, die notwendigerweise durch eine intelligente Verquickung von Software- und Hardwarekomponenten realisiert ist. Das meiste des Verfahrens lässt sich sowohl in einem Steuerrechner als auch in Elektronik /FPGAs / DSP realisieren. Das Verfahren, das System und die Software finden Anwendung bei Scan-Mikroskopen (Confocal, Multiphoton), CCD-Fluoreszenz-Mikroskopen und 4-Pi-Mikroskopen.

Besonders Vorteil haft ist es wenn das Verfahren die folgenden Schritte umfasst:

- Übermitteln der ausgewählten optischen Konfiguration an einen Steuerrechner;

- Aufnehmen eines Bildes einer Probe mit dem Scanmikroskop

- Berechnen der Fouriertransformierten des Bildes

- Bestimmung der zur ausgewählten optischen Konfiguration passenden Optischen-Transfer-Funktion,

- Vergleichen der Auflösungsgrenzen der Fouriertransformierten des Bildes mit den Auflösungsgrenzen der zur ausgewählten optischen Konfiguration passenden Optischen-Transfer-Funktion, und

- Auswerten und Anzeigen der Vergleichsergebnisse.

Das Vergleichen der Auflösungsgrenzen der Fouriertransformierten des Bildes mit den Auflösungsgrenzen der zur ausgewählten optischen Konfiguration passenden Optischen-Transfer-Funktion liefert einen Satz von Merkmalen liefert, die für die weitere Auswertung herangezogen werden. Dabei kann die Auswertung aus der Anzeige von Merkmalen auf einem Display bestehen. Ebenso kann die Auswertung der Merkmale durch Inferenz über eine Erläuterungsdatenbank eine Erklärung bestimmt und die Ergebnisse anzeigt werden. In vorteilhafter Weise werden sie Auflösungsgrenzen dadurch bestimmt, dass durch eine mathematische Transformation die Minima in der Fouriertransformierten des Bildes und der Optischen-Tranfer-Funktion maximiert und die restlichen Werte unterdrückt werden. Dabei kann die Optische-Transfer-Funktion einer Datenbank entnommen werden.

In der Zeichnung ist der Erfindungsgegenstand schematisch dargestellt und wird anhand der Figuren nachfolgend beschrieben. Dabei zeigen:

Fig. 1    eine schematische Darstellung eines Mikroskopssystems gemäß der Erfindung,

Fig. 2    ein Blockdiagram des erfindungsgemäßen Verfahrens,

Fig.3    eine schematische Darstellung des Verfahren mit einer Visualisierung der Auswirkung auf die aufgenommenen Bilddaten,

Fig. 4    erläutert das Prinzip der Inferenz, und

Fig. 5    eine schematische Darstellung eines User-Interfaces, über das der Benutzer ein Feedback zu seinen Einstellungen des Mikroskops bzw. Messungen erhält.

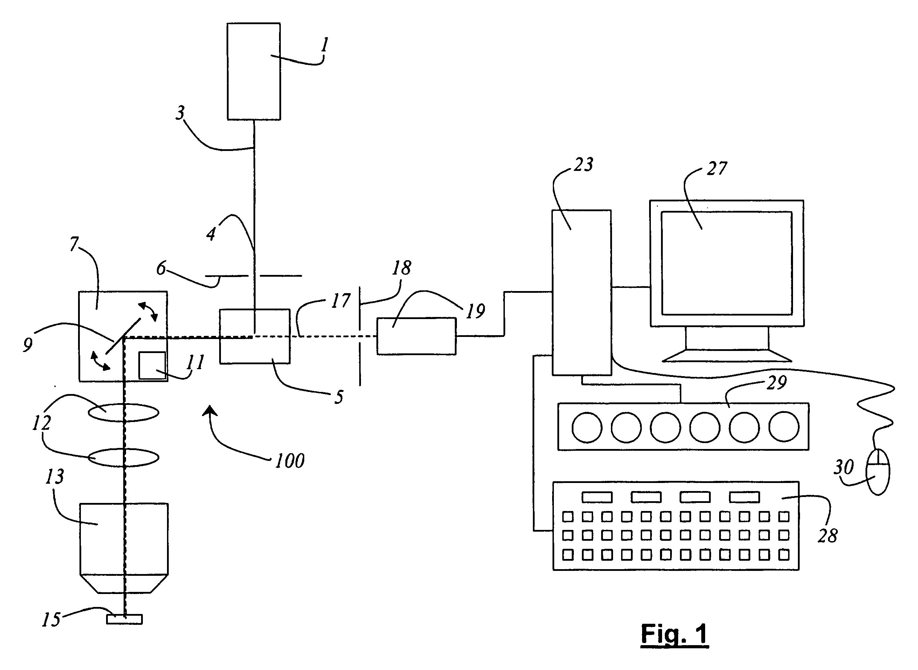

In Fig. 1 ist das Ausführungsbeispiel eines konfokalen Scanmikroskops 100 schematisch gezeigt. Dies soll jedoch nicht als Beschränkung der Erfindung aufgefasst werden. Es ist dem Fachmann hinlänglich klar, dass die Erfindung auch mit einem konventionellen Mikroskop oder konventionellen Scanmikroskop realisiert werden kann. Der von mindestens einem Beleuchtungssystem 1 kommende Lichtstrahl 3 definiert einen Beleuchtungslichtstrahl 4, der von einem Strahlteiler oder einem geeigneten Umlenkmittel 5 zu einem Scanmodul 7 reflektiert wird. Bevor der Beleuchtungslichtstrahl 4 auf das Umlenkmittel 5 trifft, passiert dieser ein Beleuchtungspinhole 6 Das Scanmodul 7 umfasst einen kardanisch aufgehängten Scanspiegel 9, der den Beleuchtungslichtstrahl 4 durch eine Scanoptik 12 und eine Mikroskopoptik 13 hindurch über bzw. durch ein Objekt 15 führt. Der Beleuchtungslichtstrahl 4 wird bei nicht transparenten Objekten 15 über die Objektoberfläche geführt. Bei biologischen Objekten 15 (Präparaten) oder transparenten Objekten kann der Beleuchtungslichtstrahl 4 auch durch das Objekt 15 geführt werden. Zu diesen Zwecken werden nichtleuchtende Präparate ggf. mit einem geeigneten Farbstoff präpariert (nicht dargestellt, da etablierter Stand der Technik). Dies bedeutet, dass verschiedene Fokusebenen des Objekts nacheinander durch den Beleuchtungslichtstrahl 4 abgetastet werden. Die nachträgliche Zusammensetzung ergibt dann ein dreidimensionales Bild des Objekts. Der vom Beleuchtungssystem 1 kommende Lichtstrahl 3 und der Beleuchtungslichtstrahl 4 sind als durchgezogene Linie dargestellt. Das vom Objekt 15 ausgehende Licht definiert einen Detektionslichtstrahl 17. Dieser gelangt durch die Mikroskopoptik 13, die Scanoptik 12 und über das Scanmodul 7 zum Strahlteiler 5, passiert diesen und gelangt über ein Detektionspinhole 18 auf mindestens einen Detektor 19, der hier als Photomultiplier ausgeführt ist. Es ist dem Fachmann klar, daß auch andere Detektionskomponenten wie Dioden, Diodenarrays, CCD Chips oder CMOS Bildsensoren eingesetzt werden können. Der vom Objekt 15 ausgehende bzw. definierte Detektionslichtstrahl 17 ist in Fig. 1 als gestrichelte Linie dargestellt. Im Detektor 19 werden elektrische, zur Leistung des vom Objekt ausgehenden Lichtes proportionale Detektionssignale erzeugt und an einen Steuerrechner 23 weitergegeben. Die im Scanmodul 7 mit Hilfe eines induktiv oder kapazitiv arbeitenden Positionssensors 11 erfassten Positionssignale werden ebenfalls an den Steuerrechner 23 übergeben. Es ist für einen Fachmann selbstverständlich, dass die Position des Scanspiegels 9 auch über die Verstellsignale ermittelt werden kann. Dem Steuerrechner 23 ist ein Display 27 zugeordnet, auf dem der Benutzer Hinweise zur Einstellung des Mikroskopsystems entnehmen kann. Ferner ist mit dem Steuerrechner 23 eine Tastatur 28, eine Einstellvorrichtung 29 für die Komponenten des Mikroskopsystems und eine Maus 30 verbunden.

Die Abbildungseigenschaften von Mikroskopen auch Scanmikroskopen sind durch die physikalischen Eigenschaften der optischen Abbildung, der Güte der im Mikroskop eingebauten optischen Komponenten, der Probe und deren Umgebung (Einbettmedium) bestimmt. Diese Werte sind teilweise bekannt aber auch teilweise unbekannt. Zum a priori Wissen gehört in der Regel das optische Design des für die Abbildung verwendeten Mikroskops und die damit verbundenen und gewünschten Abbildungseigenschaften. Zum nicht vorab bekannten Wissen (a priori knowledge) gehören die Effekte innerhalb der Probe (z.B. Brechungsindex, Streuung) und in den Randgebieten (optimale Anpassung der Brechungsindices).

Bei der Konfiguration von Mikroskop-Systemen durch den Anwender oder Benutzer wird immer nur mit derart beschränktem Wissen gearbeitet. Eventuell macht der Anwender systematische Fehler aufgrund von Unwissen oder in der Probe selber treten nicht erwartete Effekte auf. Bewertet werden kann das Ergebnis in der Regel nur durch das erfasste Bild selber, wobei evtl. das Wissen eines Fachmanns notwendig ist. In der Regel werden, wenn die gemessenen Bilddaten unbefriedigend sind, die Konfiguration und die Aufnahmeparameter in einer aufwendigen "Trial-and-Error" Prozedur angepasst. Der Fachmann bringt die Beobachtung mit dem mental vorhandenen Systemmodell in Einklang, indem er aus den Beobachtungen Erklärungshypothesen generiert und diese mit dem durch Ausbildung und Erfahrung gewachsenen Wissen auf Plausibilität prüft. Dieser Vorgang lässt sich, wie weiter unten gezeigt wird, automatisieren, indem man eine Datenbank mit Fakten und Regeln bereitstellt, welche die Beobachtungsgrößen geeignet miteinander verknüpft und einer Inferenzmachine zugänglich macht, die systematisch und iterativ die Fakten und Regeln durcharbeitet bis keine weiteren Fakten aus den initialen Fakten und den bereitgestellten Regeln mehr ableiten lassen. Erklärungen und Tips für den Benutzer sind als Teilmenge der abgeleiteten Fakten aufzufassen. Durch den Einbezug statistischer Methoden lassen sich - durch Auswertung der Fakten, die aus der statistischen Menge erfasster Pixel eines Bildes gewonnen werden - auch Signifikanzaussagen generieren. Derartige statistische Heuristiken erlauben eine zusätzliche Absicherung der generierten Erklärungen wodurch das automatisiertes Verfahren deutlich mehr leisten kann als der Experte, der häufig unbewusst und aus dem Bauch heraus arbeitet, ohne ein explizites Erklärungsmodell liefern zu können. Selbstverständlich hängt die Leistungsfähigkeit eines derartigen Systems von der gewählten Implementierung und deren Qualität ab, die diese Meldung als Freiheitsgrad offenlässt und nicht weiter definiert.

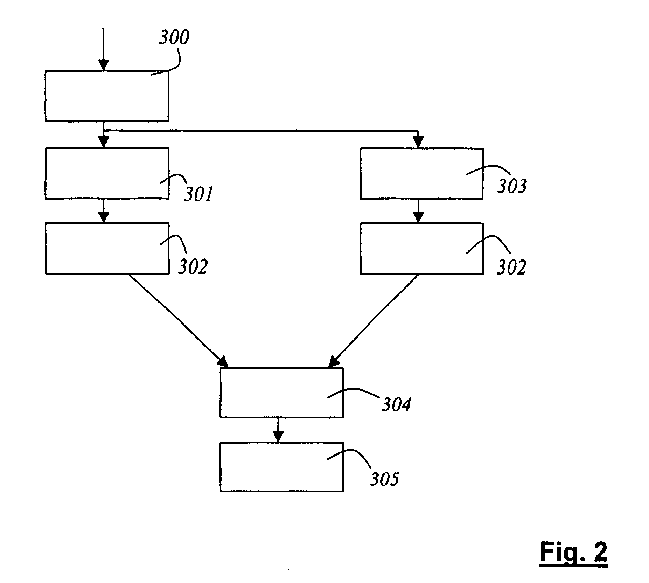

In Fig 2 ist ein Blockdiagram des erfindungsgemäßen Verfahrens dargestellt mit dem eine schnelle und optimale Einstellung eines Scanmikroskops erreicht wird. Die Qualität der Bilddaten und die Gesamtdauer des Arbeitsprozesses bis ein gutes Bild entsteht, sind die Kenngrößen an denen sich Laien und Experten messen lassen müssen. Das erfindungsgemäße Verfahren unterstützt dabei einen Laien und unterbreitet ihm eine Vielzahl von Vorschlägen, wie eine optimale Abbildung oder Einstellung erreicht werden kann. Aus den aufgenommenen Bilddaten (Messungen) kann man auf die Defekte der Bildgebung indirekt schließen, indem man Theorie mit Messung vergleicht. Das erfindungsgemäße Verfahren lässt sich am besten an Hand des Blockdiagrams (Fig. 2) beschreiben. Zuerst erfolgt das Übermitteln 300 der ausgewählten optischen Konfiguration des Mikroskops an den Steuerrechner 23. Dies ist erforderlich, da der Steuerrechner 23 in einem eigens dafür vorgesehenen Speicherbereich die Konfiguration ablegt, damit sie jederzeit für die nachfolgend notwendigen Berechnungen abgerufen werden kann. Es ist dem Fachmann hinreichend bekannt, daß derartige Übermittlungen in einem Mikroskop auch zu Zwecken der automatisierten Mikroskopkonfiguration und insbesondere während der normalen Arbeit stattfindet. In einer besonders eleganten Implementierung dieser Erfindung wird natürlich nur einmal ein Satz von Konfigurationsdaten an die verschiedenen Komponenten übertragen, wobei alle nicht direkt mit dieser Meldung zusammenhängenden Komponenten nicht dargestellt sind. Die optische Konfiguration kann, ohne hier eine abschließende Liste zu geben, folgende Elemente umfassen: die numerische Apertur des verwendeten Objektivs, die Vergrößerung des verwendeten Objektivs, den Brechungsindex des Immersionsmediums, die Zwischenvergrößerung der Mikroskopoptik, die Form der Apertur, die Wellenlänge der Beleuchtung, die Wellenlänge der Detektion, die Anzahl Abtastpunkte pro Richtung (x,y,z) etc. Die konkrete Menge an relevanten Parametern der optischen Abbildungskonfiguration hängt natürlicherweise von der im System implementierten optischen Konfiguration ab, und kann bei unterschiedlichen Ausprägungen variieren. Als Beispiel sei ein spektral detektierendes Konfokalmikroskop mit einem filterbasierten Konfokalmikroskop verglichen, wobei einmal der spektrale Detektionszweig und das anderemal die optischen Filtercharakteristiken berücksichtigt werden müssen. Ein weiteres Beispiel sei der Vergleich eines punktförmig abtastenden Konfokalmikroskops mit einer CCD basierten Widefield Mikroskop Lösung, in der die Bildformate (Abtastpbunkte pro Abtastfreiheitsgrad) einmal völlig frei gewählt werden können und bei CCD Systemen relativ fix sind. Es ist selbstverständlich, dass die optische Konfiguration von Benutzer auch durch Eingabe an den Steuerrechner 23 übergeben werden kann, was im Sinne dieser Meldung auch als Übermittlung 300 verstanden wird. Ebenso ist es denkbar, dass bei einer während der Arbeitsprozesses geänderten optischen Konfiguration, diese automatisch an dem Steuerrechner 23 übergeben werden kann, was im Sinne dieser Meldung auch als Übermittlung 300 verstanden wird. Dem Fachmann ist bei jeder Form von Realisierung auch eine Übermittlung 300 der Parameter aus unterschiedlichen Softwarekomponenten in eine zentrale für diesen Prozess zuständige Komponente auf dem Steuerrechner stattfindet geläufig. Zur Vereinfachung wird Steuerrechner auch als Synonym für diese Komponente genutzt in dem Sinne das er Software- und Hardwarekomponenten beinhaltet. Der Steuerrechner beinhaltet speziell für diese Konfigurationen einen Speicher (nicht dargestellt, da er auch als Speicherbereich in dem sowieso für einen Rechner notwendigen Speicher ausgeprägt sein kann) für die Verwaltung passender optische Konfigurationen, die für die nachfolgenden Berechnungen in erfindungsgemäßen Verfahren verwendet werden. In einem nächsten Schritt erfolgt das "Aufnehmen eines Bildes" 301 mit dem Scanmikroskop. Aus den aufgenommenen Bilddaten (Intensität) $I(\mathbf{x})$ wird ein spektrales Modell 302 des Bildes, vorteilhafter Weise direkt durch die Fouriertransformierte des Bildes, berechnet. Im nachfolgenden wird mit der Fouriertransformierten weiterargumentiert, da diese das bekannteste spektrale Modell in der Bildverarbeitung ist. Es sei aber darauf hingewiesen, daß es eine Vielzahl weiterer Möglichkeiten gibt. Passend zu der optischen Konfiguration wird aus einer auf dem Steuerrechner enthaltenen Datenbank oder aus einem auf dem Steuerrechner enthaltenen Simulationsprogramm eine optische Transferfunktion berechnet 303. Es ist dem Fachmann klar, daß die Ausführungsreihenfolge, wie im Blockschaltbild durch parallele Pfade angedeutet, willkürlich ist. Nach der Bestimmung der zur ausgewählten optischen Konfiguration passenden Optischen - Transfer - Funktion (OTF) kann man aus dem Vergleich der Auflösungsgrenzen der Fouriertransformierten des Bildes und der Auflösungsgrenzen der zur ausgewählten optischen Konfiguration passenden Optischen-Transfer-Funktion, Rückschlüsse auf die Qualität des gerade montierten Mikroskops bzw. Rückschlüsse auf die Konfigurationseinstellung des zur Untersuchung von Proben verwendeten Mikroskops treffen. Hierzu werden in einem Vergleicher 304 die OTF und das spektrale Modell des Bildes verglichen. Die Ausgaben des Vergleichers 304, der, wie unten gezeigt, ein komplexes vektorielles Ergebnis liefert, werden ausgewertet 305. Anschliessend an das Auswerten 305 erfolgt das Anzeigen der Vergleichsergebnisse bzw. der Auswertungen. Das Anzeigen kann z.B. auch direkt auf dem Display 27 erfolgen, wobei das Auswerten hinfällig wird.

Die digitale Erfassung von Signalen, Bildern, Volumen wird in der Regel durch ein lineares Modell der Form:

$$I(\mathbf{x}) = o(\mathbf{x}) \otimes h(\mathbf{x}) + n(\mathbf{x}) \qquad \text{Gleichung 1}$$

dabei ist:

$I(\mathbf{x})$ das gemessene Bild;

$\mathbf{x}$ der Vektor der Abtastkoordinaten, bzw. die Ortskoordinaten für eine bestimme Bildinformation im aufgenommenen Bildabschnitt;

$o(\mathbf{x})$ die Probe;

$\otimes$ der Faltungsoperator;

$n(\mathbf{x})$ alle Formen von Rauschen (elektronisch, Photonenrauschen, alles was nicht modelliert wurde); und

$h(\mathbf{x})$ die sogenannte Point-Spread-Function (PSF)

Dieses Modell ist dimensionslos und lässt sich auf alle drei Raumrichtungen und spektrale Komponenten anwenden. Die PSF entspricht der Abbildung eines Punktes (eines Objekts kleiner als die Auflösung des Mikroskops) der charakteristisch verschmiert wurde. Während der realen Bildgebung gilt gemäß der in erster Näherung gut validierten linearen Theorie für alle Punkte eines Bildes aus diesem Spektralbereich. Die PSF ist dem Optiker in der Theorie bekannt, dem Mikroskophersteller aus dem Design bekannt und kann auch durch den Benutzer gemessen werden. Das Messen durch den Benutzer ist ein aufwendiger Versuch und erfordert einiges an Wissen. Die PSF wird zusätzlich durch Umwelteinflüsse innerhalb der Probe teilweise stark verändert werden. In der Praxis können diese Umwelteinflüsse derart stark werden (z.B. bei sehr schlechter Mikroskopie, falschem Einbettmedium (Wasser statt Öl) etc.), dass die Theorie zusammenbricht. Die PSF ist entartet und verändert sich lokal im Volumen. Bei guter Einstellung ist die Theorie allerdings sehr gut.

Die Faltung vereinfacht sich nach Fourier-Transformation zu einer einfachen Multiplikation. Die Bildgebung hat dann die Form:

$$I(\mathbf{f}) = o(\mathbf{f}) h(\mathbf{f}) + n(\mathbf{f}) \qquad \text{Gleichung 2}$$

Dabei sind die in Gleichung 2 genannten Größen die Fouriertransformierten der Größen in Gleichung 1 und $\mathbf{f}$

stellt den lateralen Ortsfrequenzvektor dar. In Gleichung 3 ist das Rauschen außer Acht gelassen worden. Die Fourier Transformierte der Point Spread Funktion $h(\mathbf{x})$ ist $h(\mathbf{f})$ und wird in der optischen Literatur als Optical Transfer Function bezeichnet.

$$I(\mathbf{f}) = o(\mathbf{f})h(\mathbf{f}) \qquad\qquad \text{Gleichung 3}$$

An der Gleichung 3 sieht man, dass im Frequenzraum und in der Theorie im Prinzip Nullstellen der PSF erhalten bleiben. Dies entspricht einem totalen Informationsverlust für Strukturen dieser Ortsfrequenz. Zusätzlich enthält die Fouriertransformierte noch die Nullstellen des Bildes (die Frequenzen die nicht im Bild vorhanden waren). Ist die theoretische PSF $h(\mathbf{x})$ bekannt, so erwartet der Benutzer und der Mikroskopdesigner bei optimalen Einstellungen nur kleine Abweichungen von diesem Ideal. Diese kann man an der Lage der Nullstellen der optischen Transferfunktion messen.

Eine praktische Einschränkung für detaillierte Auswertungen mag zur Zeit davon gegeben sein, wenn die Nullstellen - die auf stetigen Kurven im Frequenzraum liegen - eine zu komplexe Form haben. Diese Einschränkung wird von der verfügbaren Rechenleistung heutiger Computersysteme begründet und der damit verbundenen hohen Rechenzeit gegeben, ist aber kein generell limitierendes Element und wird im Rahmen der Steigerung der Rechnerleistung gelöst werden, so daß immer detailliertere Auswertungen in immer kürzerer Zeit möglich werden.

In der Praxis werden bei einem derartigen Verfahren keine Nullstellen gesucht, was aufgrund des Rauschens nicht durchgeführt werden kann. Bei verrauschten Bildsignalen, liegen mitunter keine Nullstellen vor. Man arbeitet in der Praxis stattdessen z.B. mit dem logarithmierten Powerspektrum (siehe Gleichung 4)

$$\log(|I(\mathbf{f})|^2) = \log(|o(\mathbf{f})h(\mathbf{f}) + n(\mathbf{f})|^2) \qquad\qquad \text{Gleichung 4}$$

oder ähnlichen Funktionen und sucht negative Minima, was in der Praxis besser und robuster funktioniert. Generalisiert läßt sich hierfür aber jede mathematische Transformation einsetzen, die Minima in der Fouriertransformierten des Bildes und der Optischen-Tranfer-Funktion maximiert und die restlichen Werte unterdrückt werden. Es bleibt zu bemerken, daß für dieses Verfahren die Aufnahme eines Bildes mit Struktur notwendig ist, da ohne Struktur die Fouriertransformierte des Bildes nur aus Nullstellen besteht. In der weiter unten beschriebenen Inferenzmaschine läßt sich dies allerdings relativ einfach als Satz Fakten und Regeln berücksichtigen, wodurch der Benutzer eine Warnung auf dem Display 27 sieht.

Es gibt aber noch weitere Alternativen zur oben beschriebenen Fouriertransformation. Die Realisierung des spektralen Modells kann durch die direkte Berechnung einer Fouriertransformation erfolgen, durch den Welch-Algorithmus oder durch den Fit von ARMA- (auto regressive moving average) Modellen auf die Bilddaten erfolgen.

Durch die Anwendung dieser Vorverarbeitungen lassen sich Muster im Fourierraum ableiten, die verglichen werden müssen. Der Vergleich der Lage der Minima läßt sich anschaulich als Vergleich der Auflösungsgrenzen des Mikroskopsystems mit der Theorie deuten. Gesucht wird prinzipiell ein Verschiebungsvektorfeld, welches für jeden Bildpunkt einen Verschiebungsvektor sucht, der die Abweichung der gewünschten Nullstellen von den realen beschreibt. Aus diesem Verschiebungsvektorfeld lassen sich Abweichungen vom Ideal direkt ablesen. Dies ist, wie Bewegungsdetektion, eine recht anspruchsvolle Rechenaufgabe, aber durch einen Fit hinreichend genau lösbar. Ein derartiges Verschiebungsfeld läßt sich durch Vorgabe eines Modells direkt berechnen, wobei alle Elemente des Verschiebungsfeldes als Merkmal der Abweichung dienen kann. Derartige Verschiebungsfelder werden z.B. auch bei der Bewegungsdetektion (optical flow) gesucht, wobei die Intensität zwischen zwei Bildern erhalten wird und die Verschiebung zwischen zwei Bildern durch eine Bewegung erklärt und somit ein Geschwindigkeitsvektorfeld gesucht wird. Hier gilt auch die Intensitätserhaltung, wobe eine statische Verzerrung gesucht wird. Ein voll besetztes Vektorfeld ist relativ viel Information und meist unnötiges Datenmaterial, aber das Maximum an Information das sich ablesen läßt. Ein pragmatischer Ansatz der schon zu befriedigenden Zielen führt, ist in Gleichung 5 dargestellt.

$$h' = h(\mathbf{Mf}) \qquad\qquad \text{Gleichung 5}$$

Dieser einfache Ansatz aus Gleichung 5 lässt nur lineare Abweichungsfehler (Rotation, Verzerrung) zwischen der theoretischen PSF $h(\mathbf{f})$ und der realen PSF $h'(\mathbf{f})$ zu und stellt im Wesentlichen eine stark reduzierte Teilmenge aller Verschiebungsvektorfelder dar. Im Ortsraum entspricht die Parameter maximal einer drei mal drei Matrix die im wesentlichen neun Merkmale zur Beschreibung der Verzerrung liefert, die sich wahlweise als Koeffizienten oder als Eigenvektoren darstellen lassen, je nach mathematischem Gusto des Designers. Man fittet M so, dass die Nullstellen des Modells

$h'(\mathbf{f})$ mit den (negativen) Minima des gemessenen und nachbearbeiteten $\log(|I(\mathbf{f})|^2)$ übereinstimmen und nur ein Minimaler Restfehler übrigbleibt, wobei ein geeignetes Fehlermaß wie die quadratische Abweichungssumme gewählt werden muss.

Es sei erwähnt das hier prinzipiell alle Vektornormen aber auch gewichtete statistische Abweichungsmaße genutzt werden können, wobei eine Auflistung diese Abhandlung sprengen würde. Es sei weiterhin erwähnt, daß in einer computerbasierten Realisierung naturgemäß Festkomma- oder sogar Ganzahlarithmetik gegenüber obigen Darstellungen bevorzugt werden, diese technischen Kniffe sind aber dem Fachmann hinreichend bekannt.

Bei der dreidimensionalen Bildaufnahme kann man durch die Ermittlung der Abweichungsmatrizen aus den einzelnen Schnitten eines Volumens von der theoretischen 2D-PSF auch Aussagen über die 3D-Bildgebung machen, ohne eine 3D-PSF direkt zu ermitteln. Durch diese Reduktion auf Schnitte von PSFs lassen sich auch 3D-Verformungen der PSF ermitteln, wie sie bei optischen Fehlanpassungen (Öl/Wasser) entstehen. In diesem Fall wird die oben beschriebene Featureberechnung nicht anhand einer 3D-Messung durchgeführt, sondern anhand von Sequenzen von 2D-Messungen, wobei das generelle Verfahren gleich bleibt und durch diese Beschreibung hinreichend genau beschrieben ist. Der wesentliche Unterschied ist, dass sequentiell eine größere Menge von Merkmalen ermittelt wird.

Der Fit der PSF an die realen Minima in den Bilddaten kann mit unterschiedlichsten Such-Algorithmen mit Rechnertechnologien des Stand der Technik durchgeführt werden, wie sie in Michaelewicz Z., Fogel D.B.: How to solve it: Modem Heuristics. Heidelberg: Springer, 2000 und Gershenfeld (1998): The Nature of Mathematical Modeling. Cambridge: beschrieben sind. Diese beiden Publikationen beschreiben allerdings nur einen kleinen Teil des verfügbaren Standes der Technik von Such und Fit- Algorithmen, die hier nicht alle aufgezählt werden können.

Die oben gewählte einfache Darstellung des Matrix Fits, schliesst natürlich nicht aus, daß in Folge des technischen Fortschritts auch kompliziertere nichtlineare mathematische Warping-Modelle zur Angleichung der Theoretischen an die reale PSF genutzt werden, die durch die aktuelle Rechnertechnologie noch nicht handhabbar sind, um mehr beschreibende Merkmale zu generieren.

Wie oben beschrieben sind für die Anwendung derartiger Algorithmen Bilddaten notwendig. Aus diesem Grund sind Teile der nachfolgenden Verfahren erst bei hinreichend guter Voreinstellung des Mikroskops anwendbar (zum Finetuning) bzw. dienen dazu festzustellen, dass man davon weit weg ist.

Durch den oben beschriebenen Fit auf beispielsweise eine Deformationsmatrix **M** wird die Deformation quantifizierbar und lässt sich zur Diagnose heranziehen. Abweichungen von der optimalen Form sind in z.B. vorgegebene Toleranzklassen einteilt, die dazu dienen die Einstellung zu bewerten und dem Benutzer Feedback zu geben. Aufgrund der Messung aus dem Verfahren lassen sich Defekte und Konfigurationsprobleme ermitteln. Beispiele für messbare Abweichungen sind sphärische Aberration und Astigmatismus, die als Verbreiterung der PSF auftreten, Coma, die als Komentenschweif auftritt, etc. Derartige Verfahren lassen sich als Software mit einer Datenbank, einem User-Interface und einer Erläuterurigsdatenbank mit Erklärungskomponente implementieren. Dies kann zur Qualitatssicherung (intern in der Fertigung und extern bei Kunden, z.B. in einer Multi-User-Umgebung) herangezogen werden, wobei ein Software-Assistent als Erklärungskomponente dem Nutzer ein Feedback gibt und ihn zu gewissen Aktionen veranlasst bzw. auf gewisse Aktionen hinweist, wie z.B. "so nicht, weil....."oder" Bauteil kaputtgegangen" oder "Falsches Einbettmedium".

Auf der Basis der Abweichung kann man für Dekonvolutionsverfahren (beispielsweise) das System entscheiden lassen, ob die Aufnahme einer PSF notwendig ist oder ob man mit theoretischen Größen weiterrechnen kann. Derartige inverse Filter sind relativ instabil, mathematisch kompliziert und liefern in der Regel Artefakte. Diese Artefakte sind auch für den Experten nicht eindeutig ersichtlich, da die Möglichkeit der Vergleichsmessung fehlt. Nichtsdestotrotz sind diese Algorithmen attraktiv, da Sie eine Auflösungsverbesserung versprechen. In der Praxis wird jede Form der Entfaltung vom Benutzer als Black Box betrachtet und (leider nur) selten geprüft. In vielen sicherheitsrelevanten Applikationen (Medizin, Forschung) wird eine derartige Technik aus diesem Grund oft nicht verwendet. Eine a-priori-Prüfung der zugrundeliegenden Messdaten ist sinnvoll, die prüft, ob die Qualität hinreichend für eine anschließende Entfaltung ist. Auf diese Art kann der angeschlossene Steuerrechner direkt die Empfehlung aussprechen, dass "die schlechte Messung durch Entfaltung zu einer noch schlechteren Messung führt". Mit einer derartigen Technologie ist dann die Akzeptanz inverser Filter im Markt sicherlich verbessert, wobei hinzuzufügen ist, dass die Auswertung der Verschiebungsfelder nicht trivial ist.

Das Prinzip der Inferenz über Faktenwissen ist seit langem Standard in der Kl (Künstlichen Intelliugenz), in der eine Folge von Fakten der Form

WENN A DANN B
WENN C DANN E

...

WENN A UND C DANN D ODER F

In diesen Regeln sind die Variablen (hier A, B, C, D, F) logische Aussagen die sich überprüfen lassen. Alle Regeln sind in einer Datenbank angeordnet und werden über Backtracking-Algorithmen bearbeitet. Die Fakten werden in einer Liste geführt (z.B. A ist wahr) und alle Regeln durchgeprüft, neue Fakten über die Regelmenge generiert, bis bei einem neueren Durchlauf keine weiteren Fakten mehr erzeugt werden. Als Beispiel: Die Regel (Wenn XX DANN YY) ist wahr wenn die Prämisse XX eintritt und wird somit zu einem neuen Fakt. Dieses alte Konzept läßt sich direkt anwenden, wenn die geeignete Menge an Merkmalen geeignet kodiert vorliegt. Im Falle des Matrixbeispiels von oben sind die Matrixelemente die Merkmale in ungünstiger Form. In einer günstigeren Form liegt dieselbe Information als Eigenvektoren und Eigenwerte dieser Matrix vor, wobei dem Fachmann hinreichend klar ist, daß diese Merkmalstransformation direkt im ersten Fit mitberechnet werden kann und dementsprechend hier nicht beschrieben wurde. Es ist dem Fachmann auch hinlänglich klar, daß man auch unter zuhilfenahme der Original Matrixkomponenten die nachfolgen beispielhaft aufgeführten Regeln formulieren kann, wobei die Lesbarkeit stark zu leiden hätte. In der Theorie erwartet man z.B. daß die Eigenwerte $E_1$, $E_2$, $E_3$ der Abweichungsmatrix alle 1 (in Worten eins) sind. Die Regel

$$A = (E_1 > E_2) \text{ AND } (E_1 > E_3)$$

würde zum Beispiel eine eiförmige Verzerrung in eine Vorzugsrichtung beschreiben, wobei durch ähnliche Regeln über die Eigenvektoren auch aussagen über die Richtung gewonnen werden können. Durch eine Handvoll Regeln lassen sich den Daten so schon eine relativ einfache Interpretation wie "Eiförmige Verzerrung der PSF" geben. Die Inferenzmaschine kann dann durch iterative Konstruktion einer Erklärung immer detailiertere Auswertungen vornehmen, wobei die Art der Auswertung explizit durch das hinterlegte Regelwerk hinterlegt werden, das bei hinreichend feinen Aussagen schon grosses Aussmaß annehmen kann. Durch die Hinzunahme der ursprünglichen optischen Konfiguration in die Faktenbasis, lassen sich noch feinere Aussagen erreichen. Die Leistungsfähigkeit des Systems hängt nur von der Anzahl an Regeln, der Qualität der Regeln, den bereitgestellten initialen Fakten und der Messgenauigkeit dieser Fakten ab und läßt so sehr viele Freiheitsgerade zur Implementierung.

Eine mögliche Schlußfolgerungskette nach einigen Iterationen wäre (beispielhaft):

WENN ("Verzerrung liegt vor"

AND "Eigenwert 3 zu groß"

AND "Eigenwert 2 zu klein"

AND "Eigenvektor 3 liegt nahe bei z Achse")

DANN "Zu wenig Auflösung in z"

Die nächste Schlußfolgerung könnte sein:

WENN "Zu wenig auflösung in z" AND "Wasserobjektiv"

DANN "Prüfen Sie ob Sie nicht ein Öl-Objektiv mit Wasser betreiben"

Die Einfachheit dieser Beispiele dient nur den eigentlichen Vorgang transparent zu machen. Bei einer geeigneten Realisierung, werden sich weit größere Inferenzketten ergeben, die aber den Rahmen der Darstellung hier sprengen würden.

Es bleibt zu bemerken, daß auch neuere Abwandlungen des Inferenz Kerngedankens wie Fuzzy Regeln, Neuro-Fuzzy Regeln, Bayes Netzwerke nichts am Prinzip ändern, sondern nur anstatt den harten Entscheidungsgrenzen die durch boolsche Logik vorgegeben ist, weiche und stetige Aussagen über die Regelbasis generieren. In diesen Ansätzen werden die althergebrachten Logikelemente AND, OR, NOT, IF, THEN ... durch weichere Äquivalente explizit oder implizit ersetzt. Im Falle wahrscheinlichkeitstheoretischer Ansätze wird für die Regeln nach dem Bayes Ansatz eine Wahrscheinlichkeit durch das Regelwerk zugewiesen, wobei die Regeln mit maximaler Wahrscheinlichkeit ausgewählt werden. Dies ist dem Fachmann hinreichend bekannt und kann im Falle einer Implementierung vorteilhaft sein ohne der Lehre dieser Erfindung zu widersprechen.

Es bleibt weiterhin zu bemerken, daß durch die Wahl der Merkmale und der Regelbasis unterschiedliche Instrumente mit demselben Prinzip generiert werden können. Ein Mittel zur Messung der Strahleinkopplung eines Lasers in ein Scanmikroskop ergibt sich zum Beispiel durch die Aufnahme eines Beads und Analyse der Daten durch obige Matrix-Fit Prozedur. Der Eigenvektor nahe der z-Achse könnte angezeigt werden, oder der Winkel dieses Vektors zur z-Achse oder die Inferenzmaschine könnte zur Einteilung in Toleranzklassen wie "gut", "mittelprächtig", "schlecht" herangezogen werden. Ein derartiges System würde eher in einer Fertigung oder bei einem Servicetechniker zu finden sein. Obiges Beispiel jedoch würde mit einer anderen Regelbasis und anderen Merkmalen dem Benutzer Handlungsanweisungen, Tips, Tricks und Hilfen geben. Wie sofort auffällt, ist eine Toleranzklassengeneration nur ein spezieller Satz von Regeln.

In der Regel werden die gefundenen Fakten des Inferenzlaufes ausgegeben, wobei höchstwahrscheinlich nur eine in der Datenbank vorgemerkte Teilmenge ausgegeben wird, da interne und detaillierte Zwischenergebnisse den Benutzer nicht interessieren. Ggfs. kann man auch einen benutzerkonfigurierbaren Softwarefilter unterschiedlich detailierte Erklärungen passieren lassen. Die Wahl welche Regeln ausgegeben werden obliegt dem Geschmak des Systemdesigners und nicht zuletzt dem Zweck, da ein Servicetechniker mit internen Schlussfolgerungen eventuell mehr anfangen kann als der unbedarfte Benutzer den es nicht interessiert. Auch die Wahl der Ausgabe ist ein Freiheitsgrad, wobei bei Kundensystemen neben dem Bildschirm auch an Sprachausgabe zu denken ist.

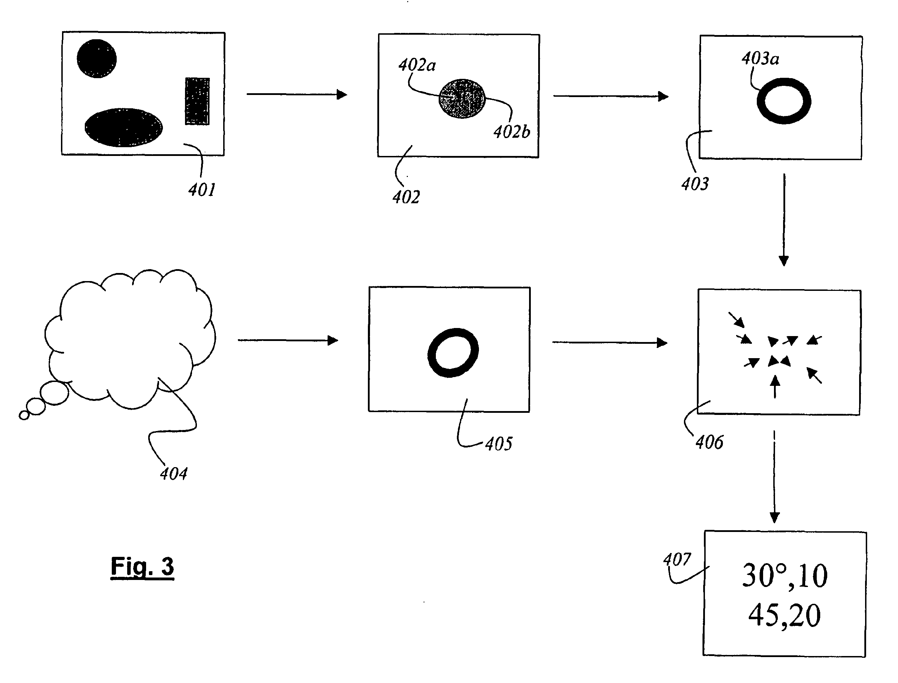

Fig. 3 beschreibt beispielhaft das Verfahren. Ein Bild 401 wird über die spektrale Modellbildung in eine Fouriertransformierte 402 (oder ein ähnliches, artverwandtes spektrales Modell) überführt. In der Fouriertransformierten erkennt man direkt die Bandbegrenzung, hier durch eine runde Struktur 402a in der Bildmitte charakterisiert. Interessant ist der Rand 402b dieser Struktur 402a, der die Grenze des Informationsverlusts darstellt. Durch die Verarbeitung wird im Fourierbild 402 diese Grenze herausgearbeitet, wobei das Resultat 403 diese Grenze 403a nachzieht. Parallel dazu liefert die Theorie 404 eine ähnliche Randlage, wenn man die OTF der gleichen Verarbeitung unterzieht (hier nicht dargestellt). Die verarbeitete OTF 405 zeigt eine ähnliche aber im Fehlerfall nicht identische Randstruktur 405a. Der Vergleicher 304 passt diese beiden Strukturen aneinander an, indem er algorithmisch ein Verschiebungsvektorfeld 406 berechnet und dieses hinreichend charakterisiert. In der Praxis ist dies eine interne Funktion, da Sie mit hohem Rechenaufwand verknüpft ist, wählt man für das Verschiebungsfeld ein einfaches mathematisches Modell mit nur wenig Freiheitsgeraden, die als Parameter 407 ermittelt werden. Diese werden dann der Auswertung weitergeleitet, bzw. direkt dargestellt.

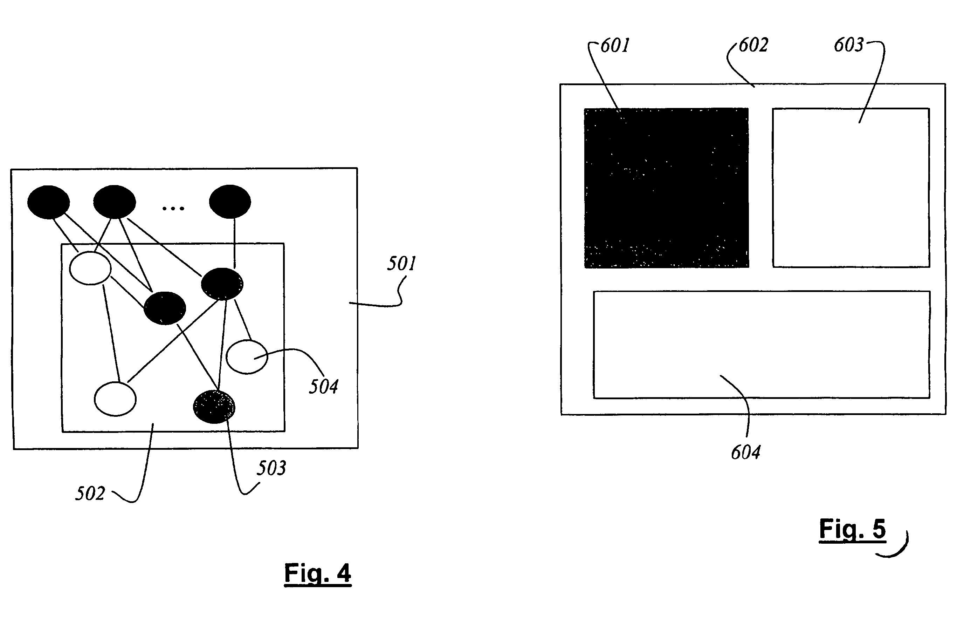

In Fig.4 ist die anschliessende Inferenz illustriert. Aus der Menge aller Regeln und Fakten 501, werden iterativ einzelne Regeln 502 herausgegriffen und ihre Prämissen geprüft. Durch die Iterative Ausführung wird so zur Laufzeit dieses Verfahrens ein Baum von Regeln mit erfüllter Prämisse 503 erzeugt, den man als Argumentation oder Beweis interpretieren kann. Der Prozess geht weiter bis keine weiteren Regeln mehr bewiesen werden.

Fig. 5 zeigt exemplarisch die Skizze eines möglichen User Interfaces 602. Dies beinhaltet eine Bildanzeige 601 sowie alle benötigten Bedienelemente zur Steuerung des Systems 603. Es ist dem Fachmann hinreichend klar, daß diese Elemente von der gewählten Implementierung abhängig sind und für ein spektral einstellbares Konfokalmikroskop anders aussehen als für ein Standardmikroskop. Zusätzlich enthält das User Interface noch eine Erklärungskomponente 604, in denen das abgeleitete Faktenwissen für den Benutzer in Textform dargestellt wird. Selbstverständlich sind andere Abwandlungen wie Sprachausgabe möglich.

Der Schutzbereich der Erfindung bestimmt sich durch die nachstehenden Ansprüche.

**Bezugszeichenliste:**

| | |
|---|---|
| 1 | Beleuchtungssystem |
| 3 | Lichtstrahl |
| 4 | Beleuchtungslichtstrahl |
| 5 | Strahlteiler |
| 6 | Beleuchtungspinhole |
| 7 | Scanmodul |
| 9 | Scanspiegel |
| 11 | Positionssensor |
| 12 | Scanoptik |
| 13 | Mikroskopoptik |
| 15 | Objekt |
| 17 | Detektionslichtstrahl |
| 18 | Detektionspinhole |

| | |
|---|---|
| 19 | Detektor |
| 23 | Steuerrechner |
| 27 | Display |
| 28 | Tastatur |
| 29 | Einstellvorrichtung |
| 30 | Maus |
| 100 | Scanmikroskop |
| 300 | Übermitteln optischer Konfiguration |
| 301 | Datenaufname/Bildaufnahme/Volumenaufnahme |
| 302 | Spektrale Modellbildung / Fouriertransformation mit anschliessender Segmentierung der optischen Auflösungsgrenze |
| 303 | Bestimmung OTF |
| 304 | Vergleich |
| 305 | Auswertung |
| 401 | Bild (auch Volumen) |
| 402 | fouriertransformiertes Bild |
| 402a | runde Struktur |
| 402b | Rand |
| 403 | Segmentierte Auflösungsgrenzen im Fourierraum des Bildes |
| 403a | Grenze |
| 404 | Theorie (graue) |
| 405 | Segmentierte Auflösungsgrenzen im Fourierraum von der Theorie vorhergesagt |
| 405a | Randstruktur |
| 406 | Verschiebungsvektorfeld im Vergleicher |
| 407 | Parameter |
| 501 | Menge aller Regeln und Fakten |
| 502 | Menge aller Regeln |
| 503 | Menge aller Regeln mit erfüllter Prämisse (die somit faktisch sind) |
| 504 | Menge aller Regeln mit nicht erfüllter Prämisse |
| 601 | Bildanzeige |

602    User Interface

603    Bedienelemente zur Steuerung (Buttons, Slider...)

604    Erklärungskomponente mit Textmeldungen


**Patentansprüche**

**1.** Automatisiertes Verfahren zur Selbstüberwachung eines Mikroskopsystems während der Datenaufnahme, umfassend die folgenden Schritte:

- Übermitteln (300) einer für das Mikroskop ausgewählten optischen Konfiguration an einen Steuerrechner;
- Aufnehmen (301) eines Bildes einer Probe mit dem Mikroskop unter Benutzung der ausgewählten optischen Konfiguration;
- Berechnen (302) der Fouriertransformierten des Bildes;
- Bestimmung (303) der zur ausgewählten optischen Konfiguration passenden Optischen-Transfer-Funktion;
- Vergleichen (304) der Auflösungsgrenzen der Fouriertransformierten des Bildes mit den Auflösungsgrenzen der zur ausgewählten optischen Konfiguration passenden Optischen-Transfer-Funktion und;
- Auswerten (305) und erklärendes Anzeigen der Versuchsergebnisse

**2.** Verfahren nach Anspruch 1, **dadurch gekennzeichnet, dass** die optische Konfiguration die numerische Apparatur des verwendeten Objektivs, die Vergrößerung des verwendeten Objektivs, den Brechungsindex des Immersionsmediums, die Zwischenvergrößerung der Mikroskopoptik, die Form der Apparatur, die Wellenlänge der Beleuchtung, die Wellenlänge der Detektion und die Anzahl der Abtastpunkte umfasst.

**3.** Verfahren nach Anspruch 1, **dadurch gekennzeichnet, dass** das Vergleichen (304) der Auflösungsgrenzen der Fouriertransformierten des Bildes mit den Auflösungsgrenzen der zur ausgewählten optischen Konfiguration passenden Optischen-Transfer-Funktion einen Satz von Merkmalen liefert, die für die weitere Auswertung herangezogen werden.

**4.** Verfahren nach Anspruch 3, **dadurch gekennzeichnet, dass** die Auswertung (305) aus der Anzeige von Merkmalen besteht.

**5.** Verfahren nach Anspruch 3, **dadurch gekennzeichnet, dass** die Auswertung (305) der Merkmale durch Inferenz über die Erläuterungsdatenbank eine Erklärung bestimmt und diese anzeigt.

**6.** Verfahren nach Anspruch 1, **dadurch gekennzeichnet, dass** die Auflösungsgrenzen dadurch bestimmt werden, dass durch eine mathematische Transformation die Minima in der Fouriertransformierten des Bildes und der Optischen-Transfer-Funktion maximiert und die restlichen Werte unterdrückt werden.

**7.** Verfahren nach Anspruch 1, **dadurch gekennzeichnet, dass** der Vergleich der Auflösungsgrenzen der Fouriertransformierten des Bildes und der Optischen-Transfer-Funktion durch den Fit einer geometrischen Transformierten auf die Beobachtungsdaten erfolgt und die Parameter der Transformation als Merkmale verwendet werden.

**8.** Verfahren nach einem der Ansprüche 1 - 7, **dadurch gekennzeichnet, dass** das aufgenommene Bild 3-dimensional ist.

**9.** Verfahren nach einem der Ansprüche 1- 8, **dadurch gekennzeichnet, dass** die Optische-Transfer-Funktion einer Datenbank entnommen wird.

**10.** Verfahren nach einem der Ansprüche 1 - 9, **dadurch gekennzeichnet, dass** die Optische-Transfer-Funktion aus den Parametern der ausgewählten optischen Konfiguration berechnet wird.

**11.** Software auf einem Datenträger, **dadurch gekennzeichnet, dass** die Software eine Datenaufnahme mit einem Scannmikroskop (100) und dass die Software eine gleichzeitige Überwachung bei Ausführung auf einen Steuerrechner mit den Schritten durchführt:

- Übermitteln (300) einer für das Mikroskop ausgewählten optischen Konfiguration an den Steuerrechner (23);
- Aufnehmen (301) eines Bildes einer Probe mit dem Mikroskop unter Benutzung der ausgewählten optischen Konfiguration;
- Berechnen (302) der Fouriertransformierten des Bildes;
- Bestimmung (303) der zur ausgewählten optischen Konfiguration passenden Optischen-Transfer-Funktion;
- Vergleichen (304) der Auflösungsgrenzen der Fouriertransformierten des Bildes mit den Auflösungsgrenzen der zur ausgewählten optischen Konfiguration passenden optischen-Transfer-Funktion; und
- Auswerten (305) und erklärendes Anzeigen der Vergleichsergebnisse

12. Software nach Anspruch 11, **dadurch gekennzeichnet, dass** die optische Konfiguration die numerische Apparatur des verwendeten Objektivs (13), die Vergrößerung des verwendeten Objektivs (13), den Brechungsindex des Immersionsmediums, die Zwischenvergrößerung der Mikroskopoptik, die Form der Apparatur, die Wellenlänge der Beleuchtung, die Wellenlänge der Detektion und die Abtastpunkte entlang der Raumachsen und der spektralen Achsen umfasst.

13. Software nach Anspruch 11, **dadurch gekennzeichnet, dass** das Vergleichen der Auflösungsgrenzen der Fouriertransformierten des Bildes mit den Auflösungsgrenzen der zur ausgewählten optischen Konfiguration passenden Optischen-Transfer-Funktion einen Satz von Merkmalen liefert, die für die weitere Auswertung herangezogen werden.

14. Software nach Anspruch 13, **dadurch gekennzeichnet**, das die Auswertung aus der Anzeige von Merkmalen besteht.

15. Software nach Anspruch 13, **dadurch gekennzeichnet, dass** die Auswertung der Merkmale durch Inferenz über eine Erläuterungsdatenbank eine Erläuterungskomponente (6 und 4) bestimmt und diese anzeigt.

16. Software nach Anspruch 11, **dadurch gekennzeichnet, dass** die Auflösungsgrenzen dadurch bestimmt werden, dass durch eine mathematische Transformation die Minima in der Fouriertransformierten des Bildes und der Optischen-Transfer-Funktion maximiert und die restlichen Werte unterdrückt werden.

17. Software nach Anspruch 11, **dadurch gekennzeichnet, dass** der Vergleich der Auflösungsgrenzen der Fouriertransformierten des Bildes und der Optischen-Transfer-Funktion durch den Fit mit einer geometrischen Transformation auf die Beobachtungsdaten erfolgt und die Parameter der Transformation als Merkmale verwendet werden

18. Software nach einem der Ansprüche 11 - 17, **dadurch gekennzeichnet, dass** das aufgenommene Bild 3-dimensional ist.

19. Software nach einem der Ansprüche 11 - 18, **dadurch gekennzeichnet, dass** die Optische-Transfer-Funktion einer Datenbank entnommen wird.

20. Software nach einem der Ansprüche 11 - 19, **dadurch gekennzeichnet, dass** die Optische-Transfer-Funktion aus den Parametern der ausgewählten optischen Konfiguration berechnet wird.

## Claims

1. Automated method for self-monitoring of a microscope system during data recording, comprising the following steps:

   - transmitting (300) an optical configuration chosen for the microscope to a control computer;
   - recording (301) an image of a specimen with the microscope using the chosen optical configuration;
   - calculating (302) the Fourier transform of the image;
   - determining (303) the optical transfer function as appropriate for the chosen optical configuration;
   - comparing (304) the resolution limits of the Fourier transform of the image with the resolution limits of the optical transfer function as appropriate for the chosen optical configuration; and
   - evaluating (305) the experiment results and displaying them in an explanatory manner.

2. Method according to Claim 1, **characterized in that** the optical configuration comprises the numerical aperture of the objective used, the magnification of the objective used, the refractive index of the immersion medium, the intermediate magnification of the microscope optics, the shape of the aperture, the wavelength of the illumination light, the wavelength of the detection light and the number of scan points.

3. Method according to Claim 1, **characterized in that** the step of comparing (304) the resolution limits of the Fourier transform of the image with the resolution limits of the optical transfer function as appropriate for the chosen optical configuration provides a set of features which are used for the further evaluation.

4. Method according to Claim 3, **characterized in that** the step of evaluating (305) comprises the display of features.

5. Method according to Claim 3, **characterized in that** the step of evaluating (305) the features comprises the use of inference to determine an explanation by means of the explanation database and displaying said explanation.

6. Method according to Claim 1, **characterized in that** the resolution limits are determined by carrying out a mathematical transformation to maximize the minima in the Fourier transform of the image and of the optical transfer function, and suppressing the remaining values.

7. Method according to Claim 1, **characterized in that** the step of comparing the resolution limits of the Fourier transform of the image and of the optical transfer function is effected by fitting a geometric transformation to the observation data and the parameters of the transformation are used as features.

8. Method according to one of Claims 1-7, **characterized in that** the recorded image is three dimensional.

9. Method according to one of Claims 1-8, **characterized in that** the optical transfer function is taken from a database.

10. Method according to one of Claims 1-9, **characterized in that** the optical transfer function is calculated from the parameters of the chosen optical configuration.

11. Software on a data storage medium, **characterized in that** the software records data using a scanning microscope (100) and **in that** the software carries out simultaneous monitoring during execution on a control computer, having the following steps:

     - transmitting (300) an optical configuration chosen for the microscope to the control computer (23);
     - recording (301) an image of a specimen with the microscope using the chosen optical configuration;
     - calculating (302) the Fourier transform of the image;
     - determining (303) the optical transfer function as appropriate for the chosen optical configuration;
     - comparing (304) the resolution limits of the Fourier transform of the image with the resolution limits of the optical transfer function as appropriate for the chosen optical configuration; and
     - evaluating (305) the experiment results and displaying them in an explanatory manner.

12. Software according to Claim 11, **characterized in that** the optical configuration comprises the numerical aperture of the objective (13) used, the magnification of the objective (13) used, the refractive index of the immersion medium, the intermediate magnification of the microscope optics, the shape of the aperture, the wavelength of the illumination light, the wavelength of the detection light and the scan points along the spatial axes and the spectral axes.

13. Software according to Claim 11, **characterized in that** the step of comparing the resolution limits of the Fourier transform of the image with the resolution limits of the optical transfer function as appropriate for the chosen optical configuration provides a set of features which are used for further evaluation.

14. Software according to Claim 13, **characterized in that** the step of evaluating comprises the display of features.

15. Software according to Claim 13, **characterized in that** the step of evaluating the characteristics comprises the use of inference to determine an explanation component (6 and 4) by means of an explanation database and displaying said explanation component.

16. Software according to Claim 11, **characterized in that** the resolution limits are determined by carrying out a mathematical transformation to maximize the minima in the Fourier transform of the image and of the optical transfer function, and suppressing the remaining values.

**17.** Software according to Claim 11, **characterized in that** the step of comparing the resolution limits of the Fourier transform of the image and of the optical transfer function is effected by fitting a geometric transformation to the observation data, and the parameters of the transformation are used as characteristics.

**18.** Software according to one of Claims 11-17, **characterized in that** the recorded image is three dimensional.

**19.** Software according to one of Claims 11-18, **characterized in that** the optical transfer function is taken from a database.

**20.** Software according to one of Claims 11-19, **characterized in that** the optical transfer function is calculated from the parameters of the chosen optical configuration.


**Revendications**

**1.** Procédé automatique d'autosurveillance d'un système de microscope pendant l'enregistrement de données, comportant les étapes suivantes :

- transmission (300) d'une configuration optique choisie pour le microscope vers un ordinateur de commande ;
- enregistrement (301) d'une image d'un échantillon avec le microscope en utilisant la configuration optique choisie ;
- calcul (302) de la transformée de Fourier de l'image ;
- détermination (303) de la fonction de transfert optique correspondant à la configuration optique choisie ;
- comparaison (304) des limites de résolution de la transformée de Fourier de l'image avec les limites de résolution de la fonction de transfert optique correspondant à la configuration optique choisie et ;
- traitement (305) et affichage explicatif des résultats de l'essai.

**2.** Procédé selon la revendication 1, **caractérisé en ce que** la configuration optique englobe l'appareillage numérique de l'objectif utilisé, le grossissement de l'objectif utilisé, l'indice de réfraction du milieu d'immersion, le grossissement intermédiaire de l'optique du microscope, la forme de l'appareillage, la longueur d'onde de l'éclairage, la longueur d'onde de la détection et le nombre de points d'analyse.

**3.** Procédé selon la revendication 1, **caractérisé en ce que** la comparaison (304) des limites de résolution de la transformée de Fourier de l'image avec les limites de résolution de la fonction de transfert optique correspondant à la configuration optique choisie fournit un jeu de caractéristiques qui sont récupérées pour le traitement ultérieur.

**4.** Procédé selon la revendication 3, **caractérisé en ce que** le traitement (305) est constitué par l'affichage de caractéristiques.

**5.** Procédé selon la revendication 3, **caractérisé en ce que** le traitement (305) des caractéristiques par inférence détermine une explication par l'intermédiaire de la banque de données d'interprétation et affiche celle-ci.

**6.** Procédé selon la revendication 1, **caractérisé en ce que** les limites de résolution sont déterminées par le fait qu'une transformation mathématique maximalise les minima de la transformée de Fourier de l'image et de la fonction de transfert optique et élimine les valeurs résiduelles.

**7.** Procédé selon la revendication 1, **caractérisé en ce que** la comparaison des limites de résolution de la transformée de Fourier de l'image et de la fonction de transfert optique est réalisée par l'ajustement d'une transformation géométrique sur les données d'observation et qu'on utilise les paramètres de la transformation comme caractéristiques.

**8.** Procédé selon une des revendications 1 - 7, **caractérisé en ce que** l'image enregistrée est en 3 dimensions.

**9.** Procédé selon une des revendications 1 - 8, **caractérisé en ce que** la fonction de transfert optique est prélevée dans une banque de données.

**10.** Procédé selon une des revendications 1 - 9, **caractérisé en ce que** la fonction de transfert optique est calculée à partir des paramètres de la configuration optique choisie.

**11.** Logiciel sur un support de données, **caractérisé en ce que** le logiciel effectue un enregistrement de données avec un microscope à balayage (100) et **en ce que** le logiciel effectue une surveillance simultanée par l'exécution sur un ordinateur de commande avec les étapes de :

- transmission (300) d'une configuration optique choisie pour le microscope vers l'ordinateur de commande (23) ;
- enregistrement (301) d'une image d'un échantillon avec le microscope en utilisant la configuration optique choisie ;
- calcul (302) de la transformée de Fourier de l'image ;
- détermination (303) de la fonction de transfert optique correspondant à la configuration optique choisie ;
- comparaison (304) des limites de résolution de la transformée de Fourier de l'image avec les limites de résolution de la fonction de transfert optique correspondant à la configuration optique choisie ; et
- traitement (305) et affichage explicatif des résultats de la comparaison.

**12.** Logiciel selon la revendication 11, **caractérisé en ce que** la configuration optique englobe l'appareillage numérique de l'objectif utilisé (13), le grossissement de l'objectif utilisé (13), l'indice de réfraction du milieu d'immersion, le grossissement intermédiaire de l'optique du microscope, la forme de l'appareillage, la longueur d'onde de l'éclairage, la longueur d'onde de la détection et les points d'analyse le long des axes de l'espace et des axes spectraux.

**13.** Logiciel selon la revendication 11, **caractérisé en ce que** la comparaison des limites de résolution de la transformée de Fourier de l'image avec les limites de résolution de la fonction de transfert optique correspondant à la configuration optique choisie fournit un jeu de caractéristiques qui sont récupérées pour le traitement ultérieur.

**14.** Logiciel selon la revendication 13, **caractérisé en ce que** le traitement est constitué par l'affichage de caractéristiques.

**15.** Logiciel selon la revendication 13, **caractérisé en ce que** le traitement des caractéristiques par inférence détermine une composante d'explication (6 et 4) par l'intermédiaire de la banque de données d'interprétation et affiche celle-ci.

**16.** Logiciel selon la revendication 11, **caractérisé en ce que** les limites de résolution sont déterminées par le fait qu'une transformation mathématique maximalise les minima de la transformée de Fourier de l'image et de la fonction de transfert optique et élimine les valeurs résiduelles.

**17.** Logiciel selon la revendication 11, **caractérisé en ce que** la comparaison des limites de résolution de la transformée de Fourier de l'image et de la fonction de transfert optique est réalisée par l'ajustement d'une transformation géométrique sur les données d'observation et qu'on utilise les paramètres de la transformation comme caractéristiques.

**18.** Logiciel selon une des revendications 11 - 17, **caractérisé en ce que** l'image enregistrée est en 3 dimensions.

**19.** Logiciel selon une des revendications 11 - 18, **caractérisé en ce que** la fonction de transfert optique est prélevée dans une banque de données.

**20.** Logiciel selon une des revendications 11 - 19, **caractérisé en ce que** la fonction de transfert optique est calculée à partir des paramètres de la configuration optique choisie.

EP 1 488 377 B1

**Fig. 1**

**Fig. 2**

**Fig. 3**

EP 1 488 377 B1

**Fig. 4**

**Fig. 5**

EP 1 488 377 B1